(19)

(11) **EP 3 729 026 B1**

(12) **EUROPEAN PATENT SPECIFICATION**

(45) Date of publication and mention of the grant of the patent:
**04.08.2021 Bulletin 2021/31**

(21) Application number: **18819348.6**

(22) Date of filing: **06.12.2018**

(51) Int Cl.:
***G01J 5/00*** *(2006.01)*

(86) International application number:
**PCT/GB2018/053540**

(87) International publication number:
**WO 2019/122815 (27.06.2019 Gazette 2019/26)**

(54) **MEASUREMENT SYSTEM FOR METAL STRIP PRODUCTION LINE**

MESSSYSTEM FÜR EINE METALLBANDPRODUKTIONSLINIE

SYSTÈME DE MESURE POUR LIGNE DE PRODUCTION DE BANDE MÉTALLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2017 GB 201721739**

(43) Date of publication of application:
**28.10.2020 Bulletin 2020/44**

(73) Proprietor: **Land Instruments International Limited**
**Derbyshire, S18 1DJ (GB)**

(72) Inventors:
- **DROEGMOELLER, Peter**
  **Dronfield**
  **Derbyshire S18 1DJ (GB)**
- **TURNER, Susan Fiona**
  **Dronfield**
  **Derbyshire S18 1DJ (GB)**

(74) Representative: **Gill Jennings & Every LLP**
**The Broadgate Tower**
**20 Primrose Street**
**London EC2A 2ES (GB)**

(56) References cited:
**EP-A1- 2 653 843**
**GB-A- 721 145**
**JP-A- H05 203 498**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 729 026 B1

## Description

The present invention relates to a measurement and control system for a metal strip production line.

Many products made of thin metal plate, sheet or foil are processed industrially as an extremely long strip. A large hot billet or ingot is passed through several rolling stages, each making it longer and thinner, until it reaches the desired thickness. In some rolling mills, strips from successive billets are joined together so that a 'continuous' strip is formed. Further surface processing is typically performed on the strip once it has been rolled into the desired thickness, such as annealing, galvanising and coating or printing.

The strip typically passes through many stages of processing as it travels along a system of conveyors and rollers. Rollers can be used to turn the strip direction through up to 180 degrees to fold its path many times and thereby fit more processing stages into a smaller area of a factory. The route may dip down into a liquid coating bath, or pass backwards and forwards many times through heating and cooling regions, or a region with a particular gaseous atmosphere. The strip may be formed into coils for further transport and storage between stages.

Many processing stages of metal strip are temperature sensitive. Thicker strip must be kept at an elevated temperature to make it sufficiently flexible to be coiled or routed around rollers. For thermal treatments such as annealing and quenching, the temperature or sequence of temperatures experienced by the strip directly affects final product properties such as hardness and ductility. For other processes such as liquid coating or printing, the temperature of the strip will affect the chemical reaction with and adhesion of the coating. In gaseous atmospheres, temperature determines the reaction rates of processes such as oxidation and reduction.

Continuous Annealing Line (CAL) and Continuous Galvanizing / Galvannealing Line (CGL) applications are used to process continuous steel strip. Annealing is a process of heating to above the crystallisation temperature followed by controlled cooling. Galvanizing involves coating with liquid zinc, and Galvannealing combines the two with a process of galvanizing followed by an annealing stage.

With international requirements for more fuel efficient vehicles growing each year the demand for lightweight high strength steel sheet is expanding. The sophisticated grain structures of advanced high strength steels result from a combination of alloy additives and precise heat treating cycles. High technology temperature measurement and control systems are necessary to keep pace with these new heat treating methods.

Techniques are known for measuring the temperature of metal strips in the production line. Spot thermometers placed at strategic points in the process can provide a direct measurement of the temperature of the product at a particular point on its surface. Typically these measurements are based on an assumed value for the emissivity of the metal strip. Emissivity, $\varepsilon$, is the proportion of infrared radiation emitted by a real surface compared to that of a blackbody, and it is related to reflectivity, r, by the equation:

$$r = 1 - \varepsilon \qquad (1)$$

Every stage of metal strip processing is likely to change its emissivity, which will vary according to the exact alloy mixture and oxidation rate of that strip. Processes such as reduction, oxidation and coating are directly linked to changes in the surface emissivity, to the extent that measurement of emissivity can be used to monitor and control the rate and effectiveness of those processes. An incorrect assumption of the emissivity of the strip may produce erroneous temperature measurements. In addition, techniques that assume a value for emissivity are not useful if the actual objective is to measure emissivity, rather than temperature. A measurement system determining the emissivity of a measurement object from a thermal image is known from EP2 653 843A1.

Product quality is typically measured for samples after production is complete, and producers rely on trial-and-error and prior knowledge of previously successful process settings to configure the line. This leads to waste of product, energy and time during the setup process of any new alloy, and serious product wastage during production if any parameter deviates from the acceptable range. The disadvantage of high speed continuous strip processing is that a large volume of poor quality product may be produced before a post-process sample is checked.

An object of the invention is to provide an apparatus and a method that can improve metal strip production lines by improving measurement accuracy of temperature and/or emissivity. The object of the invention is achieved by a device according to claim 1, a method according to claim 10 and a computer program product according to claim 11. Favourable modifications are defined in the dependent claims.

A hot metal strip may act as an effective reflector of thermal radiation. By identifying and subtracting reflected components of radiation it may be possible to determine a radiated component, emitted directly from the metal strip. In this way, it may be possible to determine accurate emissivity and temperature values for the metal strip. An accurate understanding of temperature and emissivity is considered highly important in certain applications to ensure that metal strip properties are as intended. This is important, for example, in the manufacture of metal strips for automotive applications to ensure that the strips can be turned into panels having the desired strength, ductility and anti-rust properties.

The emissivity of a highly reflective metal strip is low, and the high reflectivity means that any infrared measurements of that surface will partially be measurements of reflected radiation from the background.

The thermal imaging camera is preferably arranged to generate a wide-angle image including temperature information for hundreds or thousands of positions, corresponding to pixels within the camera. Some of these pixels will correspond to positions on the strip and some will correspond to positions on the background or surroundings.

The thermal imaging camera can determine a temperature profile in real-time. Feedback control signals may, therefore, adjust the properties of the process in real-time. This real-time feedback control can ensure high quality product at all times, minimising waste of product and energy. A number of other terms are used in the art to refer to a thermal imaging camera, such as "infra-red camera" and "thermal imaging borescope".

A plurality of thermal imaging cameras may be used with the process in order to provide redundancy in the case of malfunction or to provide viewing angles for different aspects of the metal strip. Cameras mounted before and after a particular processing stage may be used to monitor and control aspects of that stage. In another instance, a thermal imaging camera that is sensitive to a particular range of wavelengths may be chosen to either image or 'see through' constituents of the process atmosphere.

A plurality of positions on the metal strip may be selected from which the thermal imaging camera can receive radiation. Emissivity and temperature calculations may be performed for each position. Alternatively the emissivity value calculated at one position may be used to calculate temperature at other positions where the product is at the same stage in the process and is likely to have the same emissivity.

In one arrangement the temperature or emissivity calculation unit may be configured to select two positions on the metal strip, wherein the two selected positions are at substantially the same temperature, and wherein the two selected positions include reflected components emanating from respective positions in the metal strip production line which are at different temperatures. The reflected components may then be identified and subtracted. Reflected components can be identified because a different amount of radiation is received at the thermal imaging camera from the two selected positions, despite the fact that they are at substantially the same temperature. This can allow identification and subtraction of the reflected component, to determine the true temperature of the product at the two selected positions. This may be achieved by calculating emissivity.

Preferably the thermal imaging camera also receives thermal radiation radiated directly from the respective positions in the metal strip production line which are at different temperatures. This can allow the reflection compensation module to subtract this radiated flux from the radiation received from the selected positions on the product.

Preferably the temperature or emissivity calculation unit is configured to calculate the emissivity of the metal strip. The emissivity may be used to calculate the temperature of the metal strip.

The system may include a property calculation unit configured to calculate at least one property of the metal strip based on the temperature and/or emissivity determined by the temperature or emissivity calculation unit. For example, it may be possible to calculate the thickness of a coating based on the emissivity of the metal strip. The temperature of the metal strip may be used to determine reaction rates of chemical processes.

The system may use multiple thermal imaging cameras mounted at different locations along the length of the process. Cameras mounted before and after a particular processing stage may be used to monitor and control aspects of that stage. In multiple camera installations the control unit would calculate temperature, emissivity and derived parameters at each of the locations.

A comparison unit may be provided to compare the image to a previously collected image to detect a change in temperature or emissivity, or a derived parameter A change in temperature or emissivity may be associated with a change in a surface condition such as a coating thickness or it may be associated with a reaction rate . In multiple camera installations, the change in temperature, emissivity or derived parameter may be indicative of the performance of the processing stage between locations. For example, thermal imaging cameras may be positioned before and after a heating region, along the production line. A comparison of the images may be used to determine the effect of the heating region on temperature and emissivity of the strip. These measurements may be used to determine properties of the surface such as oxide layer thickness.

The images may be generated at successive points in time and the images compared to previous images by the control system to determine any of movement, speed, temperature changes and rates of change. Advantageously, this enables a history of conditions experienced by the product during formation to be compiled for quality purposes. It enables anomalous rates of change and slow degradation of materials or instrumentation such as thermocouples to be identified. Images from successive points in time may be used to log conditions or identify anomalous temperature changes during continual operation.

A feedback control unit may be provided to receive temperature or emissivity information and to generate a control signal or alarm signal for the metal strip production line based on the received temperature or emissivity information. Feedback control signals may be used to vary the speed of the production line. The production line typically includes a number of zones or regions for heating, cooling, coating and adding other properties to the metal strip. The speed of the production line will normally affect every region and therefore a change to speed may affect a number of metal properties at the same time. For this reason it may be preferable to change other parameters related to the production line that have a less overwhelming effect on the end product. For example, the feedback control signals may be used to vary temperature of heaters in different parts of the production line. The feedback control signals may be used to change the rate of cooling in the production line, for example by changing an airflow rate or a water flow rate. The feedback control signals may be used to change parameters which may be associated with a coating such as a gas concentration or a spraying rate.

The feedback control signals may be used to generate an alarm such as a visual alarm or an audible alarm. An alarm may be generated when temperature or emissivity values indicate that the metal strip is likely to have properties that would fail quality control tests. The alarm may be any of a low temperature/emissivity alarm, a high temperature/emissivity alarm, or an alarm to indicate that the temperature/emissivity is either within or not within predetermined ranges. Alarms may be triggered by comparing the temperature/emissivity at a position to predetermined maximum, minimum or ranges of threshold values. Alarms may also be triggered by temperature/emissivity differences between positions within the image, or by temperature/emissivity differences between positions in the image and alternative sources of temperature/emissivity measurement. There may be different alarms to indicate different temperature/emissivity regimes detected.

The system may include an additional temperature sensing device configured to receive radiation from a single position on the metal strip or the background process that is visible within the thermal image, and to determine a temperature for that position. A calibration unit may be configured to compare the temperature determined for the relevant position by the temperature sensing device and the thermal imaging camera, and to calibrate the temperature information associated with the image generated by the thermal imaging camera. Thus, an adjustment can be applied to the temperature calculated by the thermal imaging camera. This may be particularly helpful where material has obscured the camera lens and has reduced the amount of radiation received, leading to erroneous temperature measurements or where gas is present with an absorption line that has a similar effect.

In one arrangement the additional temperature sensing device is a pyrometer which is designed to determine a temperature at a single position such as the position in a wedge between a pair of rollers and the metal strip. The temperature sensing device may be mounted in a different position to the thermal imaging camera to minimise the likelihood that both devices experience the same kind of obscuration. In another arrangement the additional temperature sensing device may be a contact device such as a thermocouple embedded in the infrastructure of the process; in one example the thermocouple may be configured to determine the temperature of a bath such as a zinc bath into which the metal strip is dipped.

In a further example, the additional temperature sensing device would be used to provide a temperature at another location along the length of the production line and to provide data to the comparison module. In this way the temperature change during the stage of processing between the additional temperature sensing device and the thermal imaging camera could be measured.

According to another aspect of the invention there is provided a metal strip production line, comprising: the metal strip production line measurement system as previously defined; a plurality of rollers for supporting the metal strip; and a plurality of heaters configured to heat the metal strip.

Preferably the production line includes an annealing region and/or a galvanizing region. Cooling regions and oxidation or reduction regions may also be provided. Gaseous atmospheres may be maintained in the oxidation or reduction regions in order to provide a desired property on the surface of the metal strip. The concentration of gas may be modified by the control signals based on the temperature or emissivity of the metal strip.

According to another aspect of the invention there is provided a method of measuring temperature and/or emissivity in a metal strip production line, comprising the steps of claim 10.

According to yet another aspect of the invention there is provided a computer program product comprising the features of claim 11.

Embodiments of the invention are now described, by way of example, with reference to the drawings, in which:

Figure 1 is a schematic view of a metal strip production line and a measurement system in an embodiment of the present invention;

Figure 2 is a perspective view of a thermal imaging camera for use in an embodiment of the present invention; and

Figure 3 is an example of a thermal image of the inside of a metal strip production line captured by a thermal imaging camera in an embodiment of the present invention.

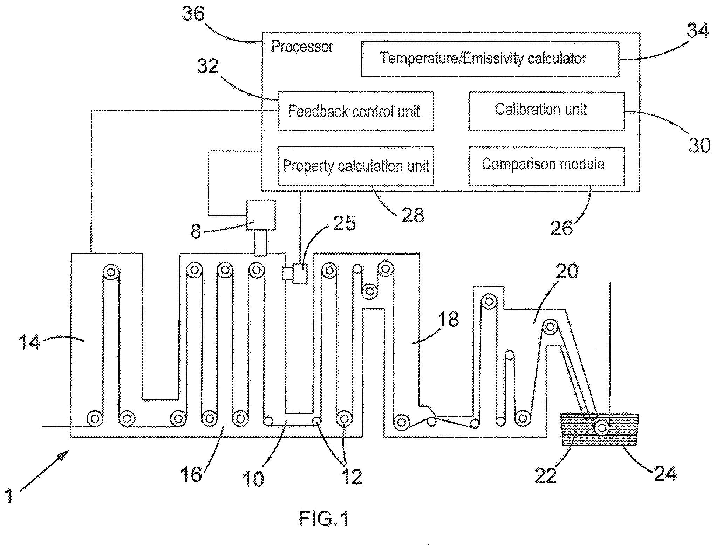

Figure 1 is a schematic view of a metal strip production line 1. In the production line a metal strip 10 is conveyed by rollers 12 between a number of zones or regions that are designed to produce a different effect on the strip. The metal strip 10 is typically enclosed by walls in the production line so that it can be shielded and so that a controlled environment can be maintained. In this example the metal strip 10 enters the production line 1 from the left as viewed in Figure 1 and enters a preheating region 14, followed by a controlled heating region 16, a quenching region 18 that provides initial strip annealing, an over aging region 20 that ages the strip in a controlled atmosphere and a galvanising region 22 that includes a zinc pot 24 into which the strip 10 is dipped.

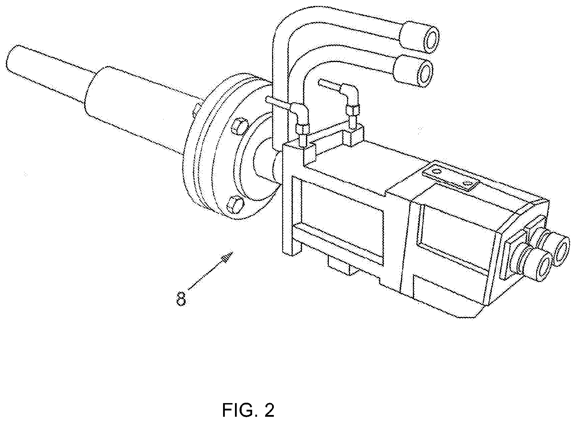

The metal strip production line 1 includes a thermal imaging camera 8. An example thermal imaging camera 8 is shown in Figure 2. This camera is known commercially as the NIR Borescope, produced by Land Instruments International Ltd. The thermal imaging camera 8 is designed to produce a high resolution image of the inside of the process 1, with more than 300,000 pixels and a 90° field of view that is produced using a fish-eye lens. The high resolution image produced by the thermal imaging camera includes temperature information for each pixel, corresponding to individual positions within the process 1. In this embodiment the thermal imaging camera 8 is inserted through a wall of the process. In other embodiments a window could be fitted into the process wall and the thermal imaging camera 8 may remain entirely outside the processing line, viewing through the window.

In the embodiment of Figure 1 a single camera is shown with a view downwards towards the metal strip 10 as it passes over the last roller of the heating region 16. In other embodiments the camera may be installed on other walls or in other regions, to view other rollers 12 or the flat sections of the metal strip 10 between rollers 12. Multiple cameras could also be used, in different regions of the production line 1. The field of view may not always be 90° and the instrument may not necessarily be aligned perpendicular to its mounting. In some embodiments, the thermal imaging camera 8 may be movable. The arrangement of thermal imaging cameras 8 can be such that the temperature and emissivity can be measured throughout the process as required.

The thermal imaging camera 8 is connected to a processor 36. The processor 36 includes a temperature/emissivity calculator 34, a feedback control unit 32, a calibration unit 30, a property calculation unit 28 and a comparison module 26. The processor may be implemented as one or more processors in hardware, software, or a combination of the two, as appropriate. The processor 36 is shown separately from the thermal imaging camera 8. In some embodiments the processor 36 may be embedded within the thermal imaging camera 8. The processor may be co-located with the thermal imaging camera 8 or it may be provided in a computer which may be located some distance away and accessed via a network.

In use, the thermal imaging camera 8 generates a real-time high resolution thermal image of the inside of the process 1, including a value for the radiated flux from each point in the image. This information is sent to the processor 36. The temperature/emissivity calculator 34 can then determine temperature and emissivity for each point of interest within the image, using a method that will be described. The property calculation unit can use the temperature or emissivity values to calculate further properties such as metal strip surface condition, including coating thicknesses, or process reaction rates. The comparison module 26 can log thermal images and compare those images with previous images to deduce movement, speed, temperature changes and rate of change. The feedback control unit 32 communicates electronically with the process 1 to instruct or advise it to change process control settings and/or raise alarms to warn personnel of potential problems. Communication between the feedback control unit 32 and the process 1 may be performed by simple signals consisting of electrical current or voltage changes, or by more complex digital communication protocols, such as ethernet communication.

A thermal image is compiled from an array of measurements of infrared radiation collected by the individual pixels of the thermal imaging camera 8. The temperature of each pixel is determined from the collected radiation by application of Planck's Law which defines blackbody radiation as a function of wavelength and temperature.

For most real objects, the emission is less efficient than that of a blackbody, and the emitted radiation is scaled down by a factor known as the surface emissivity.

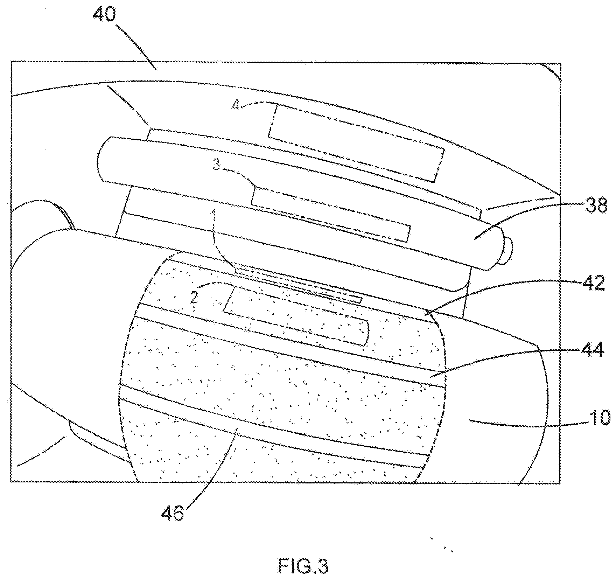

Figure 3 is an example of a image produced by the thermal imaging camera 8 based on thermal radiation radiated within the inside of the process 1 at the end of the controlled heating region 16. The image shows the hot metal strip 10 as it turns around a roller 12. First and second heater elements 38, 40 are directly visible in the image. The shape of the second heater element 40 is slightly distorted by the fish-eye lens of the thermal imaging camera 8.

The image of the metal strip 10 includes first second and third bands 42, 44, 46 that provide a higher radiated flux. The first band 42 radiates radiation based on the temperature and emissivity of the metal strip 10. In addition, the first band 42 reflects radiation from the first heater 38. The second band 44 radiates radiation from its surface and reflects radiation from the second heater 40. The third band 46 radiates radiation from the metal strip 10 and reflects radiation from a third heater that is not directly imaged by the camera 8.

The thermal imaging camera 8 receives thermal radiation from a first area 1 in the centre of the first band 42, and from a second area 2 on the surface of the metal strip 10. In addition, the thermal imaging camera 8 receives thermal radiation from a third area 3 on the first heater element 38. The thermal imaging camera 8 also receives radiation from a fourth area 4, which corresponds to a cooler region on an internal wall of the process line 1.

The geometry is such that radiation from the third area 3 is received at the thermal imaging camera 8 both directly from the first heater 38 and indirectly by way of reflection in the first band 42 on the metal strip 10. Thus, the radiation received at the thermal imaging camera 8 from the first area 1 includes a radiated component from the metal strip 10 and a reflected component from the third area 3 on the first heater 38. Likewise, the radiation received at the thermal imaging camera 8 from the second area 2 includes a radiated component from the metal strip 10 and a reflected component that is originally from the fourth area 4 on the second heater 40. The relative proportions of the reflected and radiated components depend on the emissivity $\varepsilon_s$ and reflectivity $r_s$ of the metal strip 10.

The first and second areas 1, 2 are at the same point along the length of the process 1 and are sufficiently close that their temperature $T_s$ and emissivity $\varepsilon_s$ are practically identical. There is often a variation in temperature along the width of a metal strip 10 with outer portions of the strip being slightly cooler. Therefore, it is desirable to select first and second areas that have a similar position across the width of the strip 10. The third area 3 is a hotter area with emissivity $\varepsilon_h$ and temperature $T_h$. The fourth area 4 is cooler with emissivity $\varepsilon_c$ and temperature $T_c$.

A pixel viewing a spot within the first area 1 would receive radiation $R_1$ where

$$R_1 = \varepsilon_s . f(T_s) + (1 - \varepsilon_s). \varepsilon_h f(T_h) \qquad (2)$$

where the function $f(T)$ is based on the application of Planck's law to model the radiation from a surface at temperature T, but also includes instrument specific parameters which limit the amount of that radiation which is collected by that pixel of the thermal imaging camera 8. It is generally applied as a look-up table within the camera 8 rather than an equation.

A pixel viewing a spot within the second area 2 would receive radiation $R_2$ where

$$R_2 = \varepsilon_s . f(T_s) + (1 - \varepsilon_s). \varepsilon_c f(T_c) \qquad (3)$$

A pixel viewing the third area 3 directly would receive radiation $R_3$ where

$$R_3 = \varepsilon_h f(T_h) \qquad (4)$$

Similarly, a pixel viewing the fourth area 4 directly would receive radiation $R_4$ where

$$R_4 = \varepsilon_c f(T_c) \qquad (5)$$

Subtracting equation (3) from equation (2) gives

$$R_1 - R_2 = (1 - \varepsilon_s). [\varepsilon_h f(T_h) - \varepsilon_c f(T_c)] \qquad (6)$$

In (6) the term in square brackets is equal to the difference between equations 4 and 5. Substituting and rearranging,

$$\varepsilon_s = 1 - \frac{R_1 - R_2}{R_3 - R_4} \qquad (7)$$

In this way, the emissivity of the metal strip 10 can be calculated by the temperature/emissivity calculator 34. The temperature of the metal strip 10 can also be calculated by the temperature/emissivity calculator 34 by further application of equations (2) and (4):

$$R_1 = \varepsilon_s . f(T_s) + (1 - \varepsilon_s). R_3 \qquad (8)$$

$$T_s = f^{-1} \left\{ \frac{R_1 - (1 - \varepsilon_s). R_3}{\varepsilon_s} \right\} \qquad (9)$$

Where $f^{-1}$ symbolises the inverse application of the lookup table, derived from the Planck equation.

In this way the temperature/emissivity calculator 34 can calculate both temperature and emissivity of the metal strip 10 for the position within the process that is in the view of the thermal imaging camera 8. Temperature and emissivity values can be logged for further analysis and/or output for display on a screen.

In some applications, the same mathematics could be applied to additional areas to investigate changes in temperature or emissivity within the short section of process that is visible to the thermal imaging camera. Alternatively if the process conditions are relatively constant at that point in the process additional points can be used for validation and statistical error reduction.

These techniques can offer dramatically improved real-time measurements of temperature and emissivity. Current techniques can determine temperature using a spot thermometer directed into a wedge formed between the sheet and a roller. It has been found that this wedge forms a cavity in which there are many reflections of thermal radiation. This increases the apparent emissivity of the material towards the maximum value of 1, which enables accurate measurement of temperature but means that it is not possible to measure the actual emissivity of the strip. The wedge method is also severely limited by the available positions along the process where a roller-strip wedge is accessible for viewing and monitoring by an infrared measuring device.

In some embodiments of the invention, the property calculation unit 28 in the processor 36 can use the temperature and emissivity measurements to calculate properties of the metal strip and process reaction parameters. In one embodiment the output may be a single Boolean value indicating whether both parameters are within predetermined optimum zones. In other embodiments more complicated parameters such as surface layer thickness may be estimated based on previous calibration information. It has been found that some surface layers have thicknesses that are intimately related to the metal strip emissivity.

The comparison module 26 can compare the data from a single frame with that of previous frames, and calculate rate of change of temperature, emissivity, or process reaction parameters. This enables the comparison module 26 to determine a history of conditions experienced by the product during formation to be compiled for quality purposes. It enables anomalous rates of change and slow degradation of materials or instrumentation to be identified.

The processor 36 can record the data for quality purposes. The recordings may take the form of a log of temperature, emissivity process reaction parameters, and/or their rates of change at certain times. It may also include saving full thermal images to a data storage unit (not shown).

The feedback control unit 32 will typically communicate with the process 1 based on the temperature and/or emissivity data calculated by the temperature/emissivity calculator 34 or the properties calculated by the property calculation unit 28. It may simply pass the data to the process control system, for the process control system to interpret and act upon. In other embodiments the control unit 32 may compare the measurements to predetermined limits and instruct the process control system to change settings such as temperature, reactant concentration or speed, and/or raise an alarm to alert personnel. The speed of the production line will normally affect every region in the production line and therefore a change to speed may affect a number of metal properties at the same time. For this reason it may be preferable to change other parameters related to the production line that have a less overwhelming effect on the end product. For example, the feedback control signals may be used to vary temperature of heaters in different parts of the production line. The feedback control signals may be used to change the rate of cooling in the production line, for example by changing an airflow rate or a water flow rate. The feedback control signals may be used to change parameters which may be associated with a coating such as a gas concentration or a spraying rate.

In some embodiments of the invention, a second thermal imaging camera 25 may be used to view a different part of the process. The emissivity and temperature would be calculated at both positions using the method described above. The processor 36 can use any difference in emissivity and/or temperature between the two positions to monitor, log, calculate reaction parameters for the processing stage or stages between the two measurement points, and/or instruct the process control system based on the difference data and calculated parameters. In further embodiments, multiple cameras may be used to monitor and control multiple sections of the process. In some installations, an alternative temperature sensing device might be used by the comparison module 26 to give temperature at an additional position along the process. In these cases the temperature calculated by the additional temperature sensing device can be compared to the temperature calculated according to the technique above.

An additional temperature sensing device or devices may be provided at an additional point along length of the production line. For example, a spot pyrometer may be provided to determine temperature at a particular position, which can be compared by the comparison module 26 to the temperature calculated according to the technique above, to give information about the temperature change during the process stages between the two locations. In one example the additional temperature sensing device may be a thermocouple in the zinc pot 24. In another example a spot pyrometer may be provided to determine temperature at a position where a wedge-shaped cavity formed between the sheet and a roller can be viewed. In still further embodiments the temperature may be a known reference temperature such as a melting or boiling point.

In other instances an additional temperature sensing device may be provided to measure temperature at a point that is within the view of the thermal imaging camera 8. This can be used by the calibration unit 30 to calculate a calibration parameter where appropriate. This may be relevant where the temperature determined by the additional temperature sensing device does not match the temperature determined by the temperature/emissivity calculator 34.

## Claims

1. A measurement system for use on a metal strip production line (1), the measurement system comprising: a thermal imaging camera (8) configured to receive thermal radiation from a plurality of positions along the production line (1) conveying a metal strip (10) and to generate an image based on the thermal radiation received; **characterized by**: a processor (36) including a temperature or emissivity calculation unit (34) configured to select four areas in the image, where the first and second areas in the image correspond to positions on the metal strip (10) that are at substantially the same temperature, and the third and fourth areas in the image correspond to positions along the production line (1) which are at different temperatures, such that radiation from the third and fourth areas is received at the thermal imaging camera (8) both directly from the corresponding positions, and indirectly through reflections off the first and second areas, and wherein the calculation unit (34) is further configured to determine temperature and/or emissivity of the metal strip (10) based on the equation $\varepsilon_s = 1 - (R_1-R_2)/(R_3-R_4)$, where $R_1$, $R_2$, $R_3$, and $R_4$ are values for thermal radiation received at each of four respective areas, and $\varepsilon_s$ is the emissivity of the metal strip (10).

2. The system of claim 1, wherein the temperature or emissivity calculation unit is configured to calculate the emissivity of the metal strip.

3. The system of claim 2 wherein the temperature or emissivity calculation unit is configured to use the emissivity of the product to calculate the temperature of the metal strip.

4. The measurement system of any of the preceding claims, further comprising a property calculation module (28) configured to calculate at least one property of the metal strip (10) based on the temperature and/or emissivity determined by the temperature or emissivity calculation unit (34).

5. The measurement system of any of the preceding claims, further comprising a comparison unit (26) configured to compare the image to a previously collected image to detect a change in temperature or emissivity or a calculated property.

6. The measurement system of claim 5, comprising at least two thermal imaging cameras (8), wherein the thermal imaging cameras (8) are provided at different respective positions along the length of the metal strip production line (1), and wherein the temperature or emissivity calculation unit (34) is configured to determine temperature and/or emissivity for images from the respective thermal imaging cameras (8), and wherein the comparison unit (26) is configured to detect a change in temperature and/or emissivity between the respective positions along the length of the metal strip production line (1).

7. The measurement system of any of the preceding claims, further comprising a control unit (32) configured to receive temperature or emissivity information from the temperature or emissivity calculation unit (34) and to generate a control signal or alarm signal for the metal strip production line (1) based on the received temperature or emissivity information.

8. The measurement system of any of the preceding claims, comprising an additional temperature sensing device (25) configured to receive radiation from a single position on the metal strip (10) or the process that is within the view of the thermal imaging camera (8) and to determine a temperature for that position, and wherein a calibration unit (30) is configured to compare the temperature determined for the relevant position by the temperature sensing device (25) and the thermal imaging camera (8), and to calibrate the temperature information associated with the image generated by the thermal imaging camera (8).

9. A metal strip production line (1), comprising:

   the measurement system of any of the preceding claims;
   a plurality of rollers (12) for supporting the metal strip (10); and
   a plurality of heaters (38, 40) configured to heat the metal strip (10).

10. A method of measuring temperature and/or emissivity in a metal strip production line (1), comprising the steps of:

    receiving thermal radiation at a thermal imaging camera (8) from a plurality of positions along the production line conveying a metal strip (10);
    generating an image based on the thermal radiation received; **characterized by**:

selecting four areas in the image, where the first and second areas in the image correspond to positions on the metal strip (10) that are at substantially the same temperature, and the third and fourth areas in the image correspond to positions along the production line (1) which are at different temperatures, such that radiation from the third and fourth areas is received at the thermal imaging camera (8) both directly from the corresponding positions, and indirectly through reflections off the first and second areas;
determining temperature and/or emissivity of the metal strip (10) based on the equation $\varepsilon_s = 1 - (R_1-R_2)/(R_3-R_4)$, where $R_1$, $R_2$, $R_3$, and $R_4$ are values for thermal radiation received at each of four respective areas, and $\varepsilon_s$ is the emissivity of the metal strip (10).

**11.** A computer program product comprising computer executable instructions which, when executed by the processor of a measurement system according to claim 1, causes the system to carry out steps including:
generating an image based on thermal radiation received at a thermal imaging camera (8) from a plurality of positions on a production line conveying a metal strip (10); **characterized by**:

selecting four areas in the image, where the first and second areas in the image correspond to positions on the metal strip (10) that are at substantially the same temperature, and the third and fourth areas in the image correspond to positions along the production line (1) which are at different temperatures, such that radiation from the third and fourth areas is received at the thermal imaging camera (8) both directly from the corresponding positions, and indirectly through reflections off the first and second areas;
determining temperature and/or emissivity of the metal strip (10) based on the equation $\varepsilon_s = 1 - (R_1-R_2)/(R_3-R_4)$, where $R_1$, $R_2$, $R_3$, and $R_4$ are values for thermal radiation received at each of four respective areas, and $\varepsilon_s$ is the emissivity of the metal strip (10).

## Patentansprüche

**1.** Messsystem zur Verwendung in einer Metallbandfertigungslinie (1), wobei das Messsystem Folgendes umfasst:
eine Wärmebildkamera (8), die für Folgendes konfiguriert ist: Empfangen von Wärmestrahlung von mehreren Positionen entlang der Fertigungslinie (1), die ein Metallband (10) transportiert, und Erzeugen eines Bildes basierend auf der empfangenen Wärmestrahlung; **gekennzeichnet durch**:
einen Prozessor (36), der eine Temperatur- oder Emissionsgradberechnungseinheit (34) beinhaltet, die dafür konfiguriert ist, vier Bereiche in dem Bild auszuwählen, wobei der erste und der zweite Bereich in dem Bild Positionen auf dem Metallstreifen (10) entsprechen, die im Wesentlichen dieselbe Temperatur aufweisen, und der dritte und der vierte Bereich in dem Bild Positionen entlang der Fertigungslinie entsprechen (1), die verschiedene Temperaturen aufweisen, sodass Strahlung aus dem dritten und dem vierten Bereich an der Wärmebildkamera (8) sowohl direkt von den entsprechenden Positionen als auch indirekt durch Reflexionen von dem ersten und dem zweiten Bereich empfangen wird, und wobei die Berechnungseinheit (34) ferner für Folgendes konfiguriert ist: Bestimmen von Temperatur und/oder Emissionsvermögen des Metallbandes (10) basierend auf der Gleichung $\varepsilon_s = 1 - (R_1-R_2)/(R_3-R_4)$, wobei $R_1$, $R_2$, $R_3$ und $R_4$ Werte für in jedem von vier entsprechenden Bereichen empfangene Wärmestrahlung sind und $\varepsilon_s$ der Emissionsgrad des Metallstreifens (10) ist.

**2.** System nach Anspruch 1, wobei die Temperatur- oder Emissionsgradberechnungseinheit dafür konfiguriert ist, den Emissionsgrad des Metallbandes zu berechnen.

**3.** System nach Anspruch 2, wobei die Temperatur- oder Emissionsgradberechnungseinheit dafür konfiguriert ist, den Emissionsgrad des Produkts zu verwenden, um die Temperatur des Metallbandes zu berechnen.

**4.** Messsystem nach einem der vorhergehenden Ansprüche, ferner umfassend ein Eigenschaftsberechnungsmodul (28), das für Folgendes konfiguriert ist: Berechnen mindestens einer Eigenschaft des Metallbandes (10) basierend auf der Temperatur und/oder dem Emissionsgrad, die/der durch die Temperatur- oder Emissionsgradberechnungseinheit (34) bestimmt wird.

**5.** Messsystem nach einem der vorhergehenden Ansprüche, ferner umfassend eine Vergleichseinheit (26), die dafür konfiguriert ist, das Bild mit einem zuvor aufgenommenen Bild zu vergleichen, um eine Änderung der Temperatur oder des Emissionsgrades oder einer berechneten Eigenschaft zu erfassen.

**6.** Messsystem nach Anspruch 5, wenigstens zwei Wärmebildkameras (8) umfassend, wobei die Wärmebildkameras (8) an verschiedenen entsprechenden Positionen entlang der Länge der Metallbandfertigungslinie (1) bereitgestellt sind und wobei die Temperatur- oder Emissionsgradberechnungseinheit (34) dafür konfiguriert ist, Temperatur und/oder Emissionsgrad für Bilder von den entsprechenden Wärmebildkameras (8) zu bestimmen, und wobei die Vergleichseinheit (26) dafür konfiguriert ist, eine Änderung der Temperatur und/oder des Emissionsgrades zwischen den entsprechenden Positionen entlang der Länge der Metallbandfertigungslinie (1) zu erfassen.

**7.** Messsystem nach einem der vorhergehenden Ansprüche, ferner umfassend eine Steuereinheit (32), die für Folgendes konfiguriert ist: Empfangen von Temperatur- oder Emissionsgradinformationen von der Temperatur- oder Emissionsgradberechnungseinheit (34) und Erzeugen eines Steuersignals oder eines Alarmsignals für die Metallbandfertigungslinie (1) basierend auf den empfangenen Temperatur- oder Emissionsgradinformationen.

**8.** Messsystem nach einem der vorhergehenden Ansprüche, umfassend eine zusätzliche Temperaturerfassungsvorrichtung (25), die für Folgendes konfiguriert ist: Empfangen von Strahlung von einer einzelnen Position auf dem Metallband (10) oder dem Prozess, die innerhalb der Sicht der Wärmebildkamera (8) liegt, und Bestimmen einer Temperatur für diese Position, und wobei eine Kalibriereinheit (30) für Folgendes konfiguriert ist: Vergleichen der durch die Temperaturerfassungsvorrichtung (25) und durch die Wärmebildkamera (8) für die entsprechende Position bestimmte Temperatur und Kalibrieren der Temperaturinformationen, die dem von der Wärmebildkamera (8) erzeugten Bild zugeordnet sind.

**9.** Metallbandfertigungslinie (1), Folgendes umfassend:

Messsystem nach einem der vorhergehenden Ansprüche;
mehrere Walzen (12) zum Stützen des Metallbandes (10); und
mehrere Heizvorrichtungen (38, 40), die dafür konfiguriert sind, das Metallband (10) zu erhitzen.

**10.** Verfahren zum Messen von Temperatur und/oder Emissionsgrad in einer Metallbandfertigungslinie (1), die folgenden Schritte umfassend:

Empfangen von Wärmestrahlung an einer Wärmebildkamera (8) von mehreren Positionen entlang der Fertigungslinie, die ein Metallband (10) transportiert;
Erzeugen eines Bildes basierend auf der empfangenen Wärmestrahlung; durch Folgendes gekennzeichnet:

Auswählen von vier Bereichen in dem Bild, wobei der erste und der zweite Bereich in dem Bild Positionen auf dem Metallstreifen (10) entsprechen, die im Wesentlichen dieselbe Temperatur aufweisen, und der dritte und der vierte Bereich in dem Bild Positionen entlang der Fertigungslinie entsprechen (1), die verschiedene Temperaturen aufweisen, sodass Strahlung aus dem dritten und dem vierten Bereich an der Wärmebildkamera (8) sowohl direkt von den entsprechenden Positionen als auch indirekt durch Reflexionen von dem ersten und dem zweiten Bereich empfangen wird;
Bestimmen von Temperatur und/oder Emissionsvermögen des Metallbandes (10) basierend auf der Gleichung $\varepsilon_s = 1 - (R_1-R_2)/(R_3-R_4)$, wobei $R_1$, $R_2$, $R_3$ und $R_4$ Werte für in jedem von vier entsprechenden Bereichen empfangene Wärmestrahlung sind und $\varepsilon_s$ der Emissionsgrad des Metallstreifens (10) ist.

**11.** Computerprogrammprodukt, umfassend computerausführbare Anweisungen, die, wenn sie durch den Prozessor eines Messsystems nach Anspruch 1 ausgeführt werden, das System veranlassen, Schritte auszuführen, die Folgendes einschließen:
Erzeugen eines Bildes basierend auf Wärmestrahlung, die an einer Wärmebildkamera (8) von mehreren Positionen auf einer Fertigungslinie empfangen wird, die ein Metallband (10) transportiert;
durch Folgendes gekennzeichnet:

Auswählen von vier Bereichen in dem Bild, wobei der erste und der zweite Bereich in dem Bild Positionen auf dem Metallstreifen (10) entsprechen, die im Wesentlichen dieselbe Temperatur aufweisen, und der dritte und der vierte Bereich in dem Bild Positionen entlang der Fertigungslinie entsprechen (1), die verschiedene Temperaturen aufweisen, sodass Strahlung aus dem dritten und dem vierten Bereich an der Wärmebildkamera (8) sowohl direkt von den entsprechenden Positionen als auch indirekt durch Reflexionen von dem ersten und dem zweiten Bereich empfangen wird;
Bestimmen von Temperatur und/oder Emissionsvermögen des Metallbandes (10) basierend auf der Gleichung $\varepsilon_s = 1 - (R_1-R_2)/(R_3-R_4)$, wobei $R_1$, $R_2$, $R_3$ und $R_4$ Werte für in jedem von vier entsprechenden Bereichen empfangene Wärmestrahlung sind und $\varepsilon_s$ der Emissionsgrad des Metallstreifens (10) ist.

## Revendications

**1.** Système de mesure destiné à être utilisé sur une ligne de production de bande métallique (1), le système de mesure comprenant :
une caméra à imagerie thermique (8) configurée pour recevoir un rayonnement thermique à partir d'une pluralité de positions le long de la ligne de production (1) transportant une bande métallique (10) et pour générer une image sur la base du rayonnement thermique reçu ; **caractérisé par** :
un processeur (36) comportant une unité de calcul (34) de température ou d'émissivité configurée pour sélectionner quatre zones dans l'image, où les première et deuxième zones dans l'image correspondent à des positions sur la bande métallique (10) qui sont sensiblement à la même température, et les troisième et quatrième zones de l'image correspondent à des positions le long de la ligne de production (1) qui sont à des températures différentes, de telle sorte que le rayonnement à partir des troisième et quatrième zones est reçu au niveau de la caméra à imagerie thermique (8) à la fois directement à partir des positions correspondantes, et indirectement par des réflexions issues des première et deuxième zones, et l'unité de calcul (34) étant en outre configurée pour déterminer la température et/ou l'émissivité de la bande métallique (10) sur la base de l'équation $\varepsilon_s = 1 - (R_1-R_2) / (R_3-R_4)$, où $R_1$, $R_2$, $R_3$, et $R_4$ représentent des valeurs de rayonnement thermique reçu dans chacune des quatre zones respectives, et $\varepsilon_s$ représente l'émissivité de la bande métallique (10).

**2.** Système selon la revendication 1, l'unité de calcul de température ou d'émissivité étant configurée pour calculer l'émissivité de la bande métallique.

**3.** Système selon la revendication 2, l'unité de calcul de température ou d'émissivité étant configurée pour utiliser l'émissivité du produit pour calculer la température de la bande métallique.

**4.** Système de mesure selon l'une quelconque des revendications précédentes, comprenant en outre un module de calcul de propriété (28) configuré pour calculer au moins une propriété de la bande métallique (10) sur la base de la température et/ou de l'émissivité déterminées par l'unité de calcul (34) de température ou d'émissivité.

**5.** Système de mesure selon l'une quelconque des revendications précédentes, comprenant en outre une unité de comparaison (26) configurée pour comparer l'image à une image précédemment collectée pour détecter un changement de température ou d'émissivité ou une propriété calculée.

**6.** Système de mesure selon la revendication 5, comprenant au moins deux caméras à imagerie thermique (8), les caméras à imagerie thermique (8) étant prévues en différentes positions respectives le long de la ligne de production de bande métallique (1), et l'unité de calcul (34) de température ou d'émissivité étant configurée pour déterminer la température et/ou l'émissivité pour les images provenant des caméras à imagerie thermique (8) respectives, et l'unité de comparaison (26) étant configurée pour détecter un changement de température et/ou d'émissivité entre les positions respectives le long de la ligne de production de bande métallique (1).

**7.** Système de mesure selon l'une quelconque des revendications précédentes, comprenant en outre une unité de commande (32) configurée pour recevoir des informations de température ou d'émissivité à partir de l'unité de calcul (34) de température ou d'émissivité et pour générer un signal de commande ou un signal d'alarme pour la ligne de production de bande métallique (1) sur la base des informations de température ou d'émissivité reçues.

**8.** Système de mesure selon l'une quelconque des revendications précédentes, comprenant un dispositif de détection de température (25) supplémentaire configuré pour recevoir le rayonnement à partir d'une position unique sur la bande métallique (10) ou le procédé qui se trouve à l'intérieur de la vue de la caméra à imagerie thermique (8) et pour déterminer une température pour cette position, et une unité d'étalonnage (30) étant configurée pour comparer la température déterminée pour la position pertinente par le dispositif de détection de température (25) et la caméra à imagerie thermique (8), et pour étalonner les informations de température associées à l'image générée par la caméra à imagerie thermique (8).

**9.** Ligne de production de bande métallique (1), comprenant :

le système de mesure selon l'une quelconque des revendications précédentes ;
une pluralité de rouleaux (12) pour supporter la bande métallique (10) ; et
une pluralité de dispositifs de chauffage (38, 40) configurés pour chauffer la bande métallique (10).

**10.** Procédé de mesure de température et/ou d'émissivité dans une ligne de production de bande métallique (1), comprenant les étapes de :

réception d'un rayonnement thermique au niveau d'une caméra à imagerie thermique (8) à partir d'une pluralité de positions le long de la ligne de production transportant une bande métallique (10) ;
génération d'une image sur la base du rayonnement thermique reçu ; **caractérisé par** :

la sélection de quatre zones dans l'image, où les première et deuxième zones de l'image correspondent à des positions sur la bande métallique (10) qui sont sensiblement à la même température, et les troisième et quatrième zones dans l'image correspondent à des positions le long de la ligne de production (1) qui sont à des températures différentes, de telle sorte que le rayonnement à partir des troisième et quatrième zones est reçu au niveau de la caméra à imagerie thermique (8) à la fois directement à partir des positions correspondantes, et indirectement par des réflexions issues des première et deuxième zones ;
la détermination de la température et/ou de l'émissivité de la bande métallique (10) sur la base de l'équation $\varepsilon_s = 1 - (R_1 - R_2) / (R_3 - R_4)$, où $R_1$, $R_2$, $R_3$, et $R_4$ représentent des valeurs de rayonnement thermique reçu dans chacune des quatre zones respectives, et $\varepsilon_s$ représente l'émissivité de la bande métallique (10).

**11.** Produit-programme informatique comprenant des instructions exécutables par ordinateur qui, lorsqu'elles sont exécutées par le processeur d'un système de mesure selon la revendication 1, amènent le système à réaliser des étapes comportant :
la génération d'une image sur la base d'un rayonnement thermique reçu au niveau d'une caméra à imagerie thermique (8) à partir d'une pluralité de positions sur une ligne de production transportant une bande métallique (10) ;
**caractérisé par** :

la sélection de quatre zones dans l'image, où les première et deuxième zones de l'image correspondent à des positions sur la bande métallique (10) qui sont sensiblement à la même température, et les troisième et quatrième zones dans l'image correspondent à des positions le long de la ligne de production (1) qui sont à des températures différentes, de telle sorte que le rayonnement à partir des troisième et quatrième zones est reçu au niveau de la caméra à imagerie thermique (8) à la fois directement en provenance des positions correspondantes, et indirectement par des réflexions issues des première et deuxième zones ;
la détermination de la température et/ou de l'émissivité de la bande métallique (10) sur la base de l'équation $\varepsilon_s = 1 - (R_1 - R_2) / (R_3 - R_4)$, où $R_1$, $R_2$, $R_3$, et $R_4$ représentent des valeurs de rayonnement thermique reçu dans chacune des quatre zones respectives, et $\varepsilon_s$ représente l'émissivité de la bande métallique (10).

Processor
Temperature/Emissivity calculator
Calibration unit
Comparison module
Feedback control unit
Property calculation unit
34
30
26
28
36
32
25
8
20
22
24
18
12
10
16
14
1

FIG.1

8

FIG. 2

40
4
3
38
1
42
2
44
10
46

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2653843 A1